Europäisches Patentamt

European Patent Office

Office européen des brevets

(19)

(11) **EP 0 463 918 B1**

(12) **FASCICULE DE BREVET EUROPEEN**

(45) Date de publication et mention
de la délivrance du brevet:
**06.08.1997 Bulletin 1997/32**

(51) Int Cl.6: **H04Q 3/52**

(21) Numéro de dépôt: **91401595.3**

(22) Date de dépôt: **14.06.1991**

(54) **Dipositif de commutation à structure répartie et couplage passif**

Vermittlungsvorrichtung mit verteilter Struktur und passiver Kopplung

Switching device with a distributed structure and passive coupling

(84) Etats contractants désignés:
**BE DE ES GB IT NL**

(30) Priorité: **22.06.1990 FR 9007840**

(43) Date de publication de la demande:
**02.01.1992 Bulletin 1992/01**

(73) Titulaire: **THOMSON-CSF SECURITE**
**95801 Cergy Saint Christophe (FR)**

(72) Inventeur: **Fedorczak, Christian**
**F-92045 Paris la Défense (FR)**

(74) Mandataire: **Courtellemont, Alain et al**
**THOMSON-CSF-S.C.P.I.,**
**13, Avenue du Président**
**Salvador Allende**
**94117 Arcueil Cédex (FR)**

(56) Documents cités:
**EP-A- 0 357 483** **US-A- 4 381 881**

- **IEEE JOURNAL ON SELECTED AREAS IN COMMUNICATIONS, vol. 6, no. 7, août 1988, pages 1141-1151, New York, US; R.I. MacDONALD: "Terminology for photonic matrix switches"**
- **IDEM**
- **IEEE JOURNAL OF QUANTUM ELECTRONICS, vol. OE-22, no. 6, juin 1986, pages 964- 967, New York, US; R.A. SPANKE: "Architectures for large nonblocking optical space switches"**

## Description

L'invention se rapporte au domaine de la transmission de signaux, et plus particulièrement aux dispositifs de commutation à x entrées et q sorties (q < x) permettant de transmettre sur les q sorties au plus q signaux choisis parmi ceux appliqués sur les x entrées du dispositif.

Classiquement pour la commutation des signaux vidéo, on utilise un ensemble de matrices élémentaires ayant chacune n entrées et q sorties pour réaliser une matrice plus grande à x entrées, x étant supérieur à n, et q sorties, ces matrices élémentaires étant connectées en parallèle. Pour cela les sorties des différentes matrices élémentaires sont couplées aux sorties de la matrice par l'intermédiaire d'un circuit de couplage.

On connaît par le brevet n° 88 10875 du 12 août 1988, au nom de la Demanderesse, une structure dans laquelle les matrices de commutation élémentaires de la technique antérieure sont reliées en parallèle aux sorties par un circuit de couplage passif constitué de circuits logiques, la commande du dispositif étant effectuée seulement au niveau des matrices élémentaires, et, pour que les connexions non utiles ne perturbent pas l'ensemble, les matrices élémentaires sont commandées pour que les sorties non utiles soient non actives par mise à un potentiel neutre.

Comme il ressort de la description succincte qui vient d'être faite, un problème dans ce type de dispositifs de commutation est lié à la perturbation des sorties par les signaux, présents sur certaines des entrées, qui ne doivent être transmis, à un instant donné, à aucune des sorties.

Le circuit de couplage passif décrit ci-dessus, à base de circuits logiques, peut encore par couplage électrique entre des connexions voisines introduire de la diaphonie entre les voies. De plus, une voie peut émettre des rayonnements électromagnétiques parasites dans les dispositifs d'interconnexion et de couplage et capter du rayonnement électromagnétique extérieur. Enfin, les matrices élémentaires ne sont pas isolées galvaniquement les unes des autres.

Il est à noter qu'il est connu par le document IEEE Journal on Selected Areas in Communications, vol.6, n° 7, août 1988, pages 1141-1151, US, de réaliser des matrices optiques et que ce document - pourrait suggérer de remplacer les matrices élémentaires (électroniques) du brevet français n° 8810875 par des matrices optiques avec des conversions électro-optiques devant les matrices et opto-électriques derrière les matrices, mais le dispositif de commutation ainsi réalisé présenterait toujours de la diaphonie entre les voies électroniques du circuit de couplage en aval des matrices.

L'invention a pour objet un dispositif de commutation qui permet d'éviter les inconvénients des dispositifs de commutation antérieurs, au moyen d'un circuit de couplage optique qui permet un découplage total entre matrices élémentaires et entre voies de sortie, qui évite la diaphonie entre voies actives et la génération de perturbations électromagnétiques vers l'extérieur, et qui de plus est insensible au rayonnement extérieur, phénomènes particulièrement gênants pour les dispositifs destinés à la surveillance de réseaux ferrés.

Selon la présente invention ceci est obtenu par un dispositif de commutation à structure répartie tel que défini, en particulier, dans la revendication 1 du présent document.

D'autres caractéristiques et avantages de la présente invention apparaîtront à la lecture de la description non limitative suivante de formes et de modes de réalisation préférés, en référence aux dessins annexés, dans lesquels :

- La figure 1 est une représentation schématique d'un système de commutation à m matrices élémentaires et couplage par fibres optiques selon un bus optique ;
- La figure 2 est un système de commutation à trois matrices élémentaires à couplage par fibres optiques selon une disposition en étoile ;
- La figure 3 est une vue schématique d'un mode de réalisation de système de commutation à deux matrices élémentaires, pour la commutation de signaux modulés en SPFM (pour Square Pulse Frequency Modulation selon la terminologie anglosaxonne) ;
- La figure 4 est une représentation schématique d'un exemple de modulation par un signal haché ;
- La figure 5 est une représentation schématique d'un mode de couplage mixte électrique et optique ;
- La figure 6 est une vue schématique d'un dispositif électro/optique, utilisable dans la présente invention ;
- La figure 7 représente les caractéristiques obligatoires d'un récepteur opto/électrique utilisable selon la présente invention.

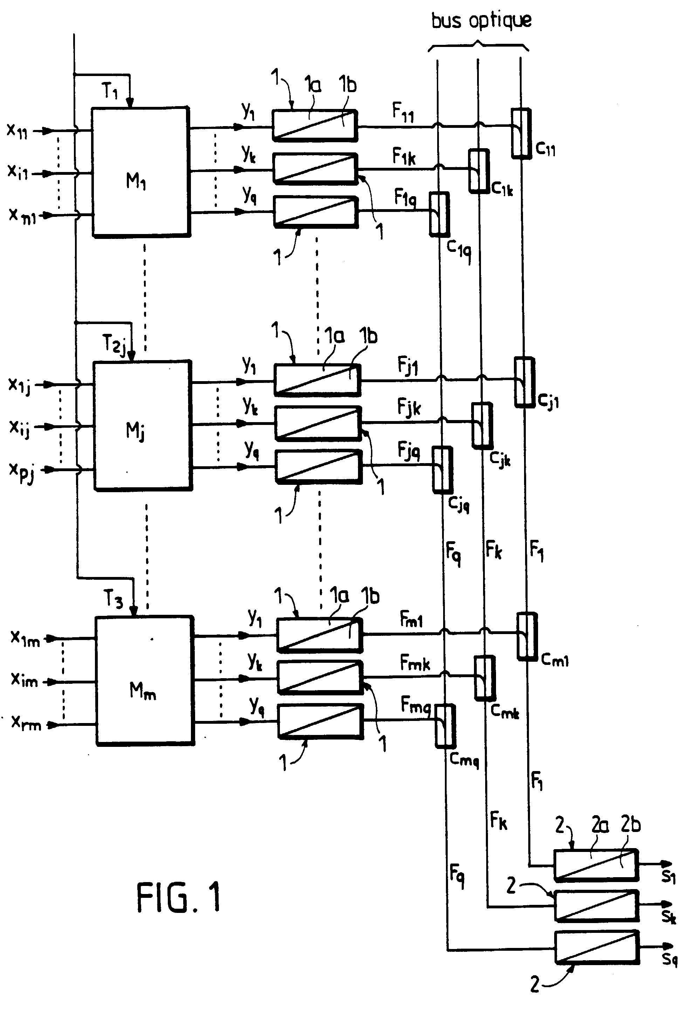

Dans la forme de réalisation de la figure 1, est représenté un système de commutation constitué de m matrices élémentaires $M_1 \ldots M_j \ldots M_m$ ayant respectivement n, ... p ... r entrées recevant respectivement des signaux par les entrées $x_{11} \ldots x_{i1} \ldots x_{n1}$ ; $x_{1j} \ldots x_{ij} \ldots x_{pj}$ ; $x_{1m} \ldots x_{im} \ldots x_{rm}$, pour les transmettre à l'une des sorties $y_1 \ldots y_q$ de la matrice élémentaire correspondante sur commande $T_1 \ldots T_j \ldots T_m$ respectivement. Les sorties des matrices sont reliées respectivement à des dispositifs de conversion électro-optiques 1 constitué avantageusement par un amplificateur de signal électrique la coopérant avec une diode électro-luminescente (ou laser) 1b. Les signaux optiques générés respectivement par les dispositifs 1b sont transmis via des fibres optiques $F_{11} \ldots F_{1k} \ldots F_{1q}$ , $F_{j1} \ldots F_{jq}$ et $F_{m1} \ldots F_{mq}$ à des coupleurs optiques $C_{11} \ldots C_{1k} \ldots C_{1q}$ ; $C_{j1} \ldots C_{jk} \ldots C_{jq}$ ; $C_{m1} \ldots C_{mk} \ldots C_{mq}$ dont les sorties sont couplées via des fibres optiques $F_1 \ldots F_k \ldots F_q$ à des dispositifs de conversion opto-électriques 2. Pour le couplage optique, les

sorties $y_k$ de même rang k des m matrices de connexion élémentaires sont couplées via les fibres $F_{jk}$ et les coupleurs associés $C_{jk}$, pour j = 1 à m, à une même fibre optique $F_k$. Chaque dispositif de conversion opto-électrique 2 est constitué d'un récepteur optique 2a et d'un dispositif électrique 2b convertissant le signal optique issu respectivement des fibres $F_1$ ... $F_k$ ... $F_q$ en signaux de sortie $S_1$ ... $S_k$ ... $S_q$.

Une telle matrice permet de choisir q signaux parmi les x signaux d'entrée des m matrices élémentaires et de les transmettre sur les q sorties de la matrice, uniquement par commande au niveau des matrices élémentaires, le circuit de couplage optique étant passif, et une seule des entrées étant connectée à l'une des sorties de rang k, $y_k$ à un instant donné. Cette matrice permet la commutation de signaux à deux niveaux (signaux logiques binaires), ces signaux étant communément représentés par un 0 logique, ou état bas, ou par un 1 logique, ou état haut. Ainsi, chaque dispositif électro-optique génère un signal optique caractérisé par le fait que l'on fait correspondre une absence de signal optique ou une puissance faible $P_0$ à un niveau 0 logique et l'émission d'un signal optique de puissance non nulle $P_1$, supérieure à $P_0$ à un niveau 1 logique. A la sortie du système, le dispositif opto-électrique 2 permet la conversion du signal optique transmis par les fibres optiques et le dispositif de couplage en un signal électrique caractérisé par le fait qu'il fait correspondre un niveau 0 logique à la présence d'une puissance optique inférieure à $R_0$ et un niveau 1 logique à la présence d'un signal optique de puissance supérieure à $R_1$. La particularité de ce système de commutation réside dans le fait que l'on couple toutes les sorties de même rang $y_k$ de chacune des matrices élémentaires sur une même fibre optique $F_k$. Le dispositif de couplage mis en oeuvre est en fait un simple additionneur effectuant la somme des puissances optiques présentes sur chacune des entrées.

Comme on l'a exposé précédemment, une seule des m sorties $y_k$ de même rang k des différentes matrices émet un signal à un moment donné. Les sorties $y_k$ de rang k des autres matrices sont inhibées et transmettent un signal 0 logique sur leur sortie $y_k$. De par la caractéristique des émetteurs optiques 1b, une seule sortie parmi celles des coupleurs optiques de rang k émet un signal à un instant donné, les autres émetteurs 1a étant inhibés du fait de la présence d'un niveau 0 logique sur leur entrée. En conséquence, chaque récepteur optique 2a reçoit le signal en provenance de la seule matrice active pour la sortie de rang k à l'instant donné. La sélection de l'entrée $x_{ij}$ sur la sortie $y_k$ se fait donc par commutation de l'entrée $x_{ij}$ sur la sortie $y_k$ de la matrice $M_j$, alors que les sorties $y_k$ des matrices de rang différent de j sont mises au niveau 0 logique. Dans ce dispositif, comme indiqué ci-dessus, à l'émission, le niveau 0 optique est caractérisé par le fait que la puissance optique est $P_0$ et le niveau 1 par $P_1$. Pour que ce dispositif puisse fonctionner, il faut qu'à la réception la puissance optique la plus faible correspondant à un 1, $(P_1)_j$ sur une sortie $S_j$ soit toujours supérieure à la somme des puissances optiques associées à des niveaux 0 logiques sur toutes les sorties de même rang de toutes les matrices $M_j$, j = 1 à m soit :

$$(P_1)_j > \Sigma_j (P_0)_j,$$

et ce quel que soit j.

Au niveau des récepteurs 2a, on définit une puissance optique reçue $R_0$ en-dessous de laquelle un récepteur délivre un signal 0 logique, et une puissance optique reçue $R_1$ au-dessus de laquelle le récepteur 2a délivre un signal 1 logique. Pour que le dispositif fonctionne, il faut que les trois relations suivantes soient respectées :

$$1. \quad R_0 > \sum_j (P_0)_j$$

$$2. \quad R_0 < R_1$$

$$3. \quad R_1 < (P_1)_j$$

quel que soit j.

Une telle matrice de commutation à structure répartie dans des matrices élémentaires et couplage parallèle des sorties des matrices élémentaires via un système de couplage optique et un bus de fibres optiques, permet l'éloignement des structures élémentaires de commutation sur des distances importantes. Les couplages optiques des matrices élémentaires sont réalisés sur le bus optique regroupant les fibres $F_1$ ... $F_k$ ... $F_q$, les coupleurs.

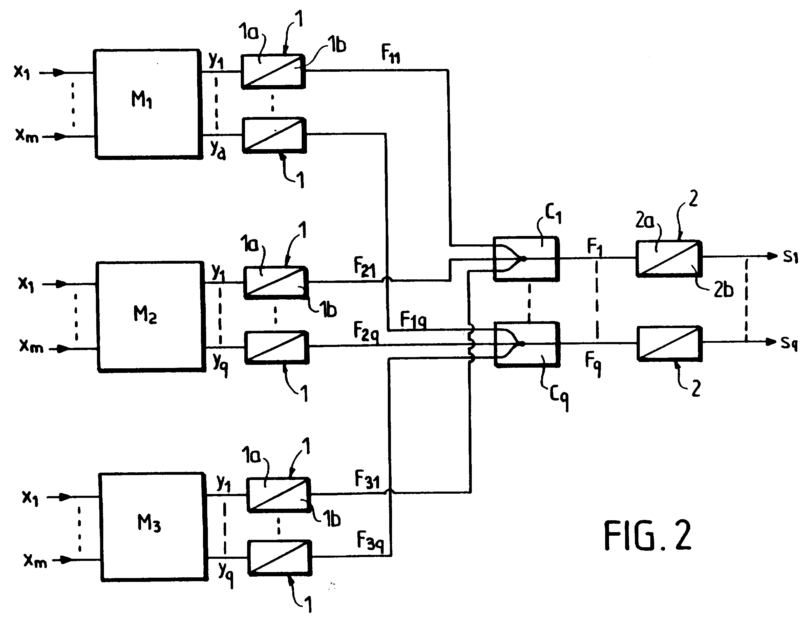

La figure 2 illustre un second mode de réalisation dans lequel les dispositifs électro-optiques et opto-électriques sont les mêmes que dans le mode de réalisation de la figure 1, mais où le couplage optique est effectué en étoile, c'est-à-dire que les sorties des m dispositifs de conversion électro-optiques reliés aux sorties de même rang k des m matrices élémentaires sont reliés à m entrées correspondantes de coupleurs optiques $C_k$ à m entrées et une sortie. Les sorties des coupleurs optiques sont reliées chacun à une fibre optique $F_k$ reliée à la sortie correspondante $S_k$ par l'intermédiaire d'un dispositif de conversion opto-électrique 2. Sur la figure 2, trois matrices de commutation $M_1$, $M_2$ et $M_3$ reçoivent des signaux selon les entrées $x_1$ à $x_m$ et ont chacune, comme dans le mode de réalisation de la figure 1, q sorties $y_1$ ... $y_q$. Les sorties $y_1$ ... $y_q$ de chacune des matrices sont reliées à des dispositifs de conversion électro-optiques 1 comme précédemment. Les 3 sorties des dispositifs 1 reliées aux sorties $y_1$ des matrices sont reliées aux trois entrées d'un coupleur $C_1$ par des fibres

optiques respectivement $F_{11}$, $F_{21}$ et $F_{31}$, etc ..., les trois sorties des dispositifs 1 reliées aux sorties $y_q$ des matrices étant reliées aux trois entrées d'un coupleur $C_q$ par des fibres optiques $F_{1q}$, $F_{2q}$, $F_{3q}$. Les sorties des coupleurs $C_1$ ... $C_q$ sont reliées via les fibres optiques $F_1$ ... $F_q$ aux dispositifs de conversion opto-électriques de sortie 2 dont les sorties électriques sont $S_1$ ... $S_q$.

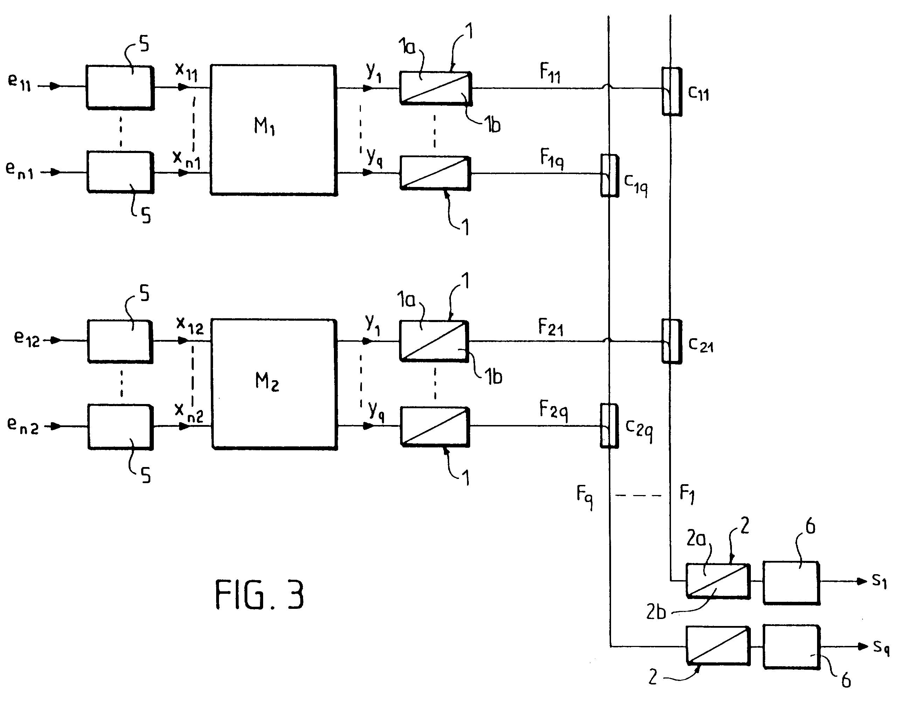

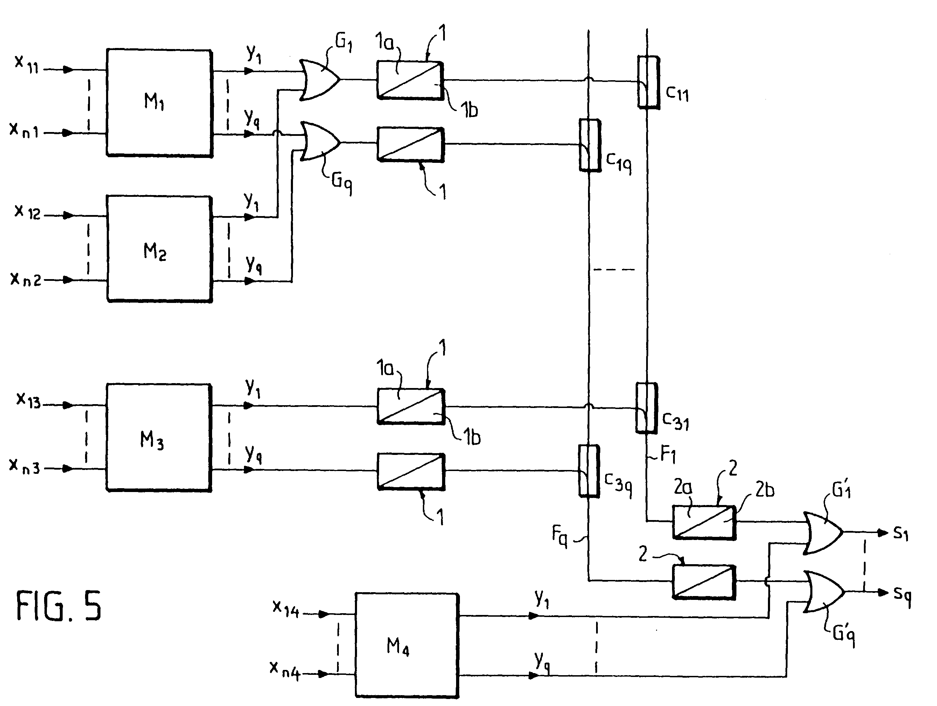

Dans une variante illustrée par la figure 3, le système de commutation est plus particulièrement adapté à la commutation des signaux SPFM (Square Pulse Frequency Modulation), utilisés notamment pour transmettre des signaux vidéo. Dans ce mode de réalisation, on a prévu en amont des matrices de commutation élémentaires $M_1$, $M_2$, des dispositifs de modulation SPFM 5 destinés à transformer les signaux analogiques d'entrée $e_{11}$ à $e_{n1}$, et $e_{12}$ à $e_{n2}$ en signaux SPFM $x_{11}$ à $x_{n1}$ et $x_{12}$ à $x_{n2}$ susceptibles d'être transmis à une des sorties $y_1$ à $y_q$ des matrices $M_1$ et $M_2$. Le couplage en parallèle des sorties $y_1$ à $y_q$ des matrices sur les sorties $S_1$ à $S_q$ est effectué de la même manière que dans le mode de réalisation de la figure 1, par des dispositifs électro-optiques 1 et opto-électriques 2, via des fibres optiques $F_{11}$ à $F_{1q}$, $F_{21}$ à $F_{2q}$ couplées respectivement par des coupleurs $C_{11}$ à $C_{1q}$, $C_{21}$ à $C_{2q}$ sur un bus de fibres optiques $F_1$ ... $F_q$. Après conversion via les dispositifs opto-électriques, des dispositifs démodulateurs 6 restituent sur les sorties $S_1$ ... $S_q$ des signaux démodulés.

Dans la description ci-dessus, on a supposé que la diode électroluminescente présente une caractéristique linéaire. Le dispositif de conversion électro-optique 1 peut être un transducteur électro-optique présentant une caractéristique de transfert différente (non linéaire ou modulée par exemple).

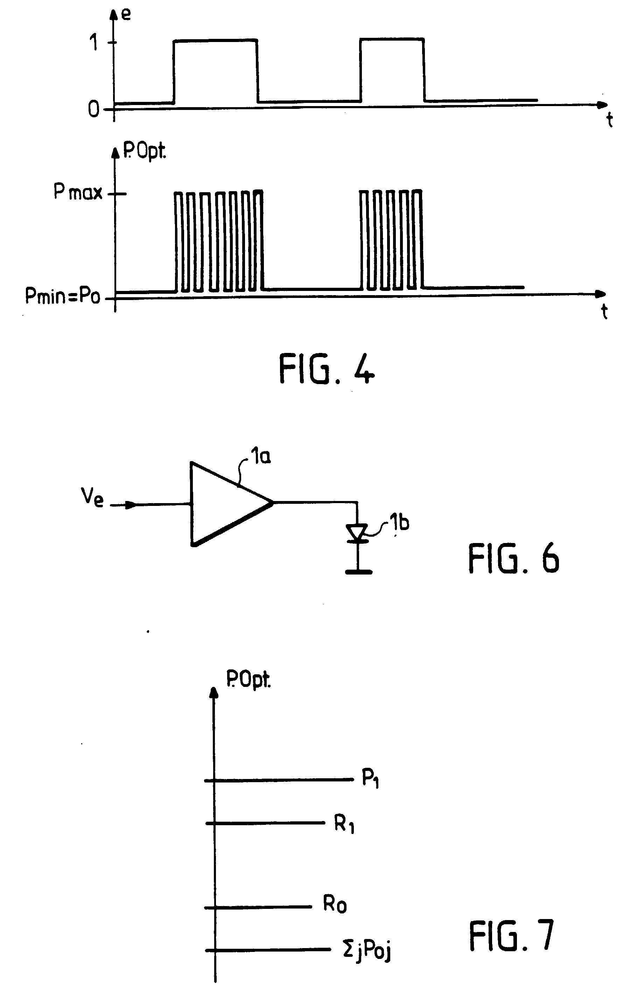

On peut également envisager un stade de modulation supplémentaire. La condition à remplir est d'avoir une seule sortie de rang k des différentes matrices $M_1$ ... $M_j$ ... $M_m$ active à la fois, les sorties $y_k$ des autres matrices émettant une puissance optique inférieure ou égale à $P_0$. La sortie active pourrait par exemple faire correspondre à un niveau 0 logique une puissance optique inférieure ou égale à $P_0$ et à un niveau 1 logique un signal optique haché entre deux niveaux Pmin et Pmax à une fréquence f déterminée, comme représenté sur la figure 4 où ont été représentés en correspondance les niveaux logiques et la puissance optique émise en fonction du temps.

Dans le mode de réalisation de la figure 5, on a représenté un exemple de dispositif de commutation avec couplage mixte électrique/optique. Dans ce dispositif de commutation, deux matrices élémentaires $M_1$ et $M_2$ sélectionnent des signaux présents sur des entrées $x_{11}$ ... $x_{n1}$ ; $x_{12}$ ... $x_{n2}$ pour les transmettre à des sorties $y_1$ ... $y_q$. Les sorties de même rang de ces deux matrices sont couplées via des coupleurs électriques représentés sous forme de circuits OU logiques $G_1$ ... $G_q$. Une matrice de commutation $M_3$ sélectionne des signaux sur ses entrées $x_{13}$ ... $x_{n3}$ pour les transmettre à des sorties $y_1$ ... $y_q$ de cette matrice. Des dispositifs de conversion électro-optiques 1, sont respectivement reliés aux sorties des portes $G_1$ ... $G_q$ et aux sorties $y_1$ ... $y_q$ de la matrice $M_3$. Les signaux optiques transmis par les différents dispositifs 1 sont transmis par des fibres optiques associées puis couplés respectivement, au moyen de dispositifs de couplage, à des fibres optiques $F_1$ ... $F_q$ jusqu'à des dispositifs opto-électriques 2. Les signaux qui résultent de la conversion opto-électrique sont transmis à des coupleurs portes OU logiques $G'_1$ ... $G'_q$ électriques, également reliés à des sorties $y_1$ ... $y_q$ d'une matrice locale $M_4$ ayant des entrées $x_{14}$ ... $x_{n4}$.

Dans une structure mixte telle que décrite ci-dessus, en suivant la même organisation que celle décrite en référence aux figures 1 à 3, toutes les sorties de rang k des différentes matrices sont couplées en parallèle sur une même sortie $S_k$, une seule des sorties de rang k des différentes matrices étant active à la fois. Ainsi les sorties $y_1$ des matrices $M_1$ et $M_2$ sont couplées via la porte $G_1$, la sortie de la porte $G_1$ et la sortie $y_1$ de la matrice $M_3$ sont couplées à la fibre optique $F_1$ via les coupleurs $C_{11}$ et $C_{31}$, et le rayonnement optique résultant, après conversion en signal électrique est couplé au signal présent sur la sortie $y_1$ de $M_4$ via une porte $G'_1$ pour délivrer le signal à la sortie $S_1$. Il en est de même pour le couplage en parallèle des sorties $y_2$ ... $y_q$ aux sorties $S_2$ ... $S_q$.

Un tel système est notamment utilisable sur des réseaux ferrés relativement longs à stations relativement rapprochées, par exemple le métro. Une (ou plusieurs) matrice de commutation élémentaire est prévue dans chaque station et ces matrices sont interconnectées sur les fibres optiques d'un bus optique. Les liaisons courtes (locales) peuvent être électriques et les liaisons longues optiques.

Ce mode de réalisation est donc un système de commutation à couplage passif mixte, électrique et optique, de matrices élémentaires, qui utilise le fait que seule une sortie de rang k, $y_k$, des différentes matrices élémentaires est active à un instant donné, les sorties des autres matrices élémentaires de même rang étant désactivées par présentation d'un niveau 0 logique (électrique ou optique).

La figure 6 est le schéma d'un dispositif de conversion électro-optique 1 où le signal d'entrée $V_e$ est appliqué à l'amplificateur 1a, le signal de sortie étant appliqué à une diode électroluminescente 1b.

Sur la figure 7 sont représentés les différents niveaux de puissance optique $P_{opt}$ tels que définis ci-dessus, à savoir le niveau $P_1$ de puissance minimale associée à un 1 logique sur une sortie de l'une quelconque des matrices élémentaires, la somme $\Sigma_j(P_0)_j$ de toutes les puissances associées au niveau 0 des sorties couplées des m matrices, la puissance optique reçue $R_0$ en dessous de laquelle le récepteur 2a délivre un niveau 0 logique et la puissance optique reçue $R_1$ au-dessus de laquelle le récepteur 2a délivre un signal 1 logique.

Ainsi se trouve résolue selon la présente invention le problème de la sélection de q signaux parmi les x signaux d'entrée d'une matrice et de leur transfert sur les sorties $S_1$ ... $S_q$ via des matrices élémentaires couplées en parallèle sur les sorties $S_1$ ... $S_q$ au moyen d'un circuit de couplage dans lequel les liaisons sont au moins partiellement optiques pour éviter la diaphonie entre voies et les perturbations par rayonnement électromagnétique entre voies.

L'invention n'est nullement limitée aux formes et modes de réalisation décrits ci-dessus, dont elle englobe toutes les modifications et variantes issues du même principe de base. C'est ainsi que la présente invention décrite pour des signaux à deux niveaux peut être étendue à la transmission de signaux à plusieurs niveaux, la seule condition à réaliser étant d'avoir une seule sortie $y_k$ d'une matrice $M_j$ parmi les m matrices active à la fois, les autres sorties $y_k$ émettant une puissance optique inférieure à $P_0$. La sortie active $y_k$ de la matrice $M_j$ émet une puissance optique $P = \lambda Ve$, P étant la puissance optique de la matrice active, $\lambda$ un coefficient de transformation électrique/optique et Ve la grandeur électrique d'entrée. Le dispositif de réception 2a permet de faire correspondre à la puissance optique reçue P un signal électrique Vs caractérisé par la relation suivante : $Vs = \alpha(P+\beta)$, dans laquelle $\alpha$ est le coefficient de transfert optique électrique du dispositif opto-électrique 2, P est la puissance optique de la matrice active, et $\beta$ un décollement (par exemple la puissance résiduelle au niveau 0 des autres matrices). Si l'on choisit

$$\beta = - \sum_j (P_0)_j$$

et $\alpha = 1/\lambda$, on obtient $V_s = Ve$, ce qui correspond à un dispositif transparent.

L'invention trouve son application dans la réalisation de grilles de commutation de signaux logiques permettant la connexion d'un certain nombre de sources prises parmi un ensemble de sources réparties connectées sur les entrées d'un certain nombre de matrices élémentaires vers des sorties. En particulier, l'invention s'applique à la réalisation de grilles de commutation audio-numériques ou vidéo-numériques.

Selon l'invention, on peut réaliser des grilles pour signaux modulés de type SPFM, comme spécifié ci-dessus, à modulateur SPFM en amont de chaque entrée de matrice élémentaire et démodulateur SPFM en aval de chaque récepteur optique. Ce type de modulation permet de convertir des signaux analogiques (vidéo en particulier, mais aussi audio entre autres) en signaux à deux niveaux ce qui permet de se ramener au problème de base explicité ci-dessus. On peut également réaliser des grilles à structures réparties sur de grandes distances, grâce à l'interconnexion des grilles élémentaires par l'intermédiaire de fibres et couplages optiques. En particulier, les divers éléments essentiels décrits et revendiqués dans la présente invention peuvent être utilisés séparément ou en combinaison, couplage par bus optiques, couplages en étoile, ou autres réalisations mixtes issues du même principe.

## Revendications

1. Dispositif de commutation à structure répartie et couplage passif, comportant x entrées de signaux réparties sur m matrices de commutation élémentaires ($M_1...M_j...M_m$) et q sorties de signaux ($S_1... S_k...S_q$), les matrices élémentaires étant pourvues de q sorties ($y_1...y_k..y_q$) et les sorties de mêmes rangs ($y_k$) étant couplées en parallèle à la sortie correspondante ($S_k$) par un circuit de couplage sans commande, caractérisé en ce que le circuit de couplage comporte des moyens de liaison à fibres optiques associés, côté sorties des matrices élémentaires, à des dispositifs de conversion électro-optiques (1) constitués par un amplificateur (1a) associé à un élément générateur de rayonnement (1b) choisi parmi les diodes électro-luminescentes et les dispositifs à laser et, côté sorties du dispositif, à des dispositifs de conversion opto-électrique, le couplage parallèle des sorties ($y_k$) de même rang des matrices élémentaires étant effectué par des coupleurs à fibres optiques et en ce que pour commuter des signaux analogiques, ces signaux sont transformés en signaux SPFM, un modulateur (5) étant disposé en amont de chaque entrée de matrice ($M_1$ ; $M_2$), tandis qu'un démodulateur (6) est disposé en aval de chaque dispositif opto-élecrique (2).

2. Dispositif de commutation selon la revendication 1, caractérisé en ce que, pour la transmission de signaux à deux états logiques 1 et 0, les dispositifs de conversion élecro-optiques (1) respectivement reliés à des sorties des matrices élémentaires convertissent les signaux de sortie des matrices élémentaires correspondants en signaux optiques, un signal optique de faible puissance $P_0$ correspondant à un niveau 0 logique et un signal optique de puissance $P_1$ plus élevée correspondant à un niveau 1 logique ;

   et en ce que les moyens de conversion opto-électriques (2) font correspondre un 0 logique à la présence d'une puissance optique inférieure à $R_0$ et un niveau 1 logique à la présence d'un signal optique de puissance supérieure à $R_1$, les puissances optiques étant telles que

$$-R_0 > \sum_j (P_0)_j$$

$$-R_0 < R_1$$

$$-R_1 < (P_1)_j$$

où

$$\sum_j (P_0)_j$$

est la somme des puissances optiques associées au niveau logique 0 susceptibles d'être couplées à une même fibre, et $(P_1)_j$ la puissance optique minimale correspondant à un niveau 1 logique.

3. Dispositif selon la revendication 1, caractérisé en ce que le circuit de couplage parallèle des sorties $(y_k)$ de même rang des matrices élémentaires à la sortie $(S_k)$ correspondante comporte une fibre optique $(F_k)$ sur laquelle sont répartis des coupleurs $(C_{1k} \dots C_{nk})$ respectivement reliés par des fibres d'entrée $(F_{1k} \dots F_{jk} \dots F_{nk})$ aux sorties des dispositifs de conversion électro-optiques reliés aux sorties correspondantes $(y_k)$ des matrices, l'ensemble des fibres optiques $(F_1 \dots F_k \dots F_q)$ formant un bus optique.

4. Dispositif selon la revendication 1, caractérisé en ce que le circuit de couplage parallèle des sorties $(y_k)$ de même rang des matrices élémentaires à la sortie $(S_k)$ correspondante comporte un coupleur $(C_k)$ à m entrées reliées par des fibres optiques $(F_{k1} \dots F_{kq})$ aux sorties des dispositifs de conversion électro-optiques eux-mêmes reliés aux sorties correspondantes $(y_k)$ des matrices, le coupleur $(C_k)$ ayant une sortie reliée à la sortie $(S_k)$ correspondante via une fibre optique de sortie $(F_k)$, formant ainsi un couplage en étoile.

5. Dispositif selon la revendication 1, caractérisé en ce que les moyens opto-électriques (2) sont constitués par un récepteur optique (2a) associé à un dispositif générateur de signaux électriques (2b).

6. Dispositif de commutation selon la revendication 1, caractérisé en ce que, pour la transmission de signaux à deux états logiques 1 et 0, les dispositifs de conversion électro-optiques transmettent pour l'un des états un signal de puissance optique faible, $(P_0)$, et pour l'autre état un signal optique haché à une fréquence (f) très supérieure à la fréquence du signal logique, entre deux niveaux de puissance optique (Pmin et Pmax).

7. Dispositif de commutation selon la revendication 1, caractérisé en ce que le circuit de couplage est mixte et comporte, en plus des moyens de liaison à fibres optiques, des moyens de couplage passif à circuits logiques.

**Claims**

1. Switching device with a distributed structure and passive coupling, comprising x signal inputs distributed over m elementary switching matrices $(M_1 \dots M_j \dots M_m)$ and q signal outputs $(S_1 \dots S_k \dots S_q)$, the elementary matrices being provided with q outputs $(y_1 \dots y_k \dots y_q)$ and the outputs $(y_k)$ of the same rows being coupled in parallel with the corresponding output $(S_k)$ by a non-controlled coupling circuit, characterized in that the coupling circuit comprises fibre-optic linkage means associated, on the output side of the elementary matrices, with electro-optical conversion devices (1) which consist of an amplifier (1a) associated with a radiation-generating element (1b) chosen from light-emitting diodes and laser devices and, on the output side of the device, with optoelectrical conversion devices, the parallel coupling of the outputs $(y_k)$ of the same row of the elementary matrices being effected by fibre-optic couplers and in that, in order to switch analogue signals, these signals are converted into SPFM signals, a modulator (5) being arranged upstream of each matrix $(M_1; M_2)$ input, while a demodulator (6) is arranged downstream of each optoelectrical device (2).

2. Switching device according to Claim 1, characterized in that, in order to transmit signals having two logic states, 1 and 0, the electrooptical conversion devices (1) respectively connected to outputs of the elementary matrices convert the output signals of the corresponding elementary matrices into optical signals, an optical signal of low power $P_0$ corresponding to a logic 0 level and an optical signal of higher power $P_1$ corresponding to a logic 1 level;

and in that the optoelectrical conversion means (2) make a logic 0 correspond to the presence of an optical power of less than $R_0$ and a logic 1 level to the presence of an optical signal of power greater than $R_1$, the optical powers being such that

$$-R_0 > \sum_j (P_0)_j$$

$$-R_0 < R_1$$

$$-R_1 < (P_1)_j$$

where

$$\sum_{j} (P_0)_j$$

is the sum of the optical powers which are associated with the logic 0 level and capable of being coupled to the same fibre, and $(P_1)_j$ is the minimum optical power corresponding to a logic 1 level.

3. Device according to Claim 1, characterized in that the circuit for parallel coupling of the outputs $(y_k)$ of the same row of the elementary matrices to the corresponding output $(S_k)$ comprises an optical fibre $(F_k)$ distributed along which are couplers $(C_{1k}...C_{nk})$ respectively linked via input fibres $(F_{1k}...F_{jk}...F_{nk})$ to the outputs of the electrooptical conversion devices linked to the corresponding outputs $(y_k)$ of the matrices, the set of optical fibres $(F_1...F_k...F_q)$ forming an optical bus.

4. Device according to Claim 1, characterized in that the circuit for parallel coupling of the outputs $(y_k)$ of the same row of the elementary matrices to the corresponding output $(S_k)$ comprises a coupler $(C_k)$ with m inputs linked via optical fibres $(F_{k1}...F_{kq})$ to the outputs of the electrooptical conversion devices which are themselves linked to the corresponding outputs $(y_k)$ of the matrices, the coupler $(C_k)$ having one output linked to the corresponding output $(S_k)$ via an output optical fibre $(F_k)$, thus forming a star coupling.

5. Device according to Claim 1, characterized in that the optoelectrical means (2) consist of an optical receiver (2a) associated with an electrical-signal-generating device (2b).

6. Switching device according to Claim 1, characterized in that, in order to transmit signals having two logic states, 1 and 0, the electrooptical conversion devices transmit, for one of the states, a signal of low optical power $(P_0)$ and, for the other state, an optical signal chopped, at a frequency (f) very much greater than the frequency of the logic signal, between two optical power levels ($P_{min}$ and $P_{max}$).

7. Switching device according to Claim 1, characterized in that the coupling circuit is a hybrid circuit and comprises, in addition to the fibre-optic linkage means, passive coupling means based on logic circuits.

## Patentansprüche

1. Schaltvorrichtung mit verteilter Struktur und passiver Kopplung, mit x auf m Elementarschaltmatrizen ($M_1 ... M_j ... M_m$) verteilten Signaleingängen und q Signalausgängen ($S_1 ... S_k ... S_q$), wobei die Elementarmatrizen q Ausgänge ($y_1 ... y_k ... y_q$) besitzen und die Ausgänge gleichen Rangs ($y_k$) parallel an den entsprechenden Ausgang ($S_k$) über eine Koppelschaltung ohne Steuerung gekoppelt sind, dadurch gekennzeichnet, daß die Koppelschaltung Lichtleitfaser-Verbindungsmittel aufweist, die auf der Seite der Elementarmatrizen elektro-optischen Wandlervorrichtungen (1) zugeordnet sind, die aus einem Verstärker (1a), der einem aus den Elektrolumineszenzdioden und den Laservorrichtungen ausgewählten Lichterzeugungselement (1b) zugeordnet ist, bestehen, und die auf der Ausgangsseite der Vorrichtung opto-elektrischen Wandlervorrichtungen zugeordnet sind, wobei die parallele Kopplung der Ausgänge ($y_k$) gleichen Rangs der Elementarmatrizen durch Lichtleitfaser-Koppler erfolgt, und daß zur Durchschaltung von analogen Signalen diese Signale in SPFM-Signale umgewandelt werden, wobei ein Modulator (5) vor jedem Eingang einer Matrix ($M_1$; $M_2$) angeordnet ist, während ein Demodulator (6) hinter jeder opto-elektrischen Vorrichtung (2) angeordnet ist.

2. Schaltvorrichtung nach Anspruch 1, dadurch gekennzeichnet, daß zur Übertragung von Signalen mit zwei logischen Zustände 1 und 0 die mit Ausgängen von Elementarmatrizen verbundenen elektro-optischen Wandlervorrichtungen (1) die entsprechenden Ausgangssignale der Elementarmatrizen in optische Signale umwandeln, wobei ein optisches Signal geringer Leistung $P_0$ einem logischen Pegel 0 und ein optisches Signal größerer Leistung $P_1$ einem logischen Pegel 1 entspricht, und daß die opto-elektrischen Wandlermittel (2) eine logischen Wert 0 dem Vorhandensein einer optischen Leistung kleiner als $R_0$ und einen logischen Pegel 1 dem Vorhandensein einer optischen Leistung größer als $R_1$ zuordnen, wobei die optischen Leistungen so sind, daß gilt:

$$-R_0 > \sum_{j} (P_0)_j$$

$$-R_0 < R_1$$

$$-R_1 < (P_1)_j$$

wobei $\Sigma_j (P_0)_j$ die Summe der optischen Leistungen ist, die dem logischen Pegel 0 zugeordnet sind und die mit der gleichen Faser gekoppelt werden können und $(P_1)_j$ der optischen Mindestleistung entspricht, die einem logischen Pegel 1 entspricht.

3. Vorrichtung nach Anspruch 1, dadurch gekennzeichnet, daß die Vorrichtung zur parallelen Kopplung der Ausgänge $(y_k)$ gleichen Rangs der Elementarmatrizen an den entsprechenden Ausgang $(S_k)$ eine Lichtleitfaser $(F_k)$ aufweist, auf der Koppler $(C_{1k} ... C_{nk})$ verteilt sind, die über Eingangsfasern $(F_{1k} ... F_{jk} ... F_{nk})$ mit den Ausgängen der elektro-optischen Wandlervorrichtungen verbunden sind, die mit den entsprechenden Ausgängen $(y_k)$ der Matrizen verbunden sind, wobei die Gesamtheit der Lichtleitfasern $(F_1 .. F_k .. F_q)$ eine optische Busleitung bildet.

4. Vorrichtung nach Anspruch 1, dadurch gekennzeichnet, daß die Vorrichtung zur parallelen Kopplung der Ausgänge $(y_k)$ gleichen Rangs der Elementarmatrizen an den entsprechenden Ausgang $(S_k)$ einen Koppler $(C_k)$ mit m Eingängen aufweist, die über Lichtleitfasern $(F_{k1} .. F_{kq})$ mit den Ausgängen der elektro-optischen Wandlervorrichtungen verbunden sind, die selbst mit den entsprechenden Ausgängen $(y_k)$ der Matrizen verbunden sind, wobei der Ausgang des Kopplers $(C_k)$ mit dem entsprechenden Ausgang $(S_k)$ über eine Ausgangs-Lichtleitfaser $(F_k)$ verbunden ist, wodurch eine sternförmige Kopplung entsteht.

5. Vorrichtung nach Anspruch 1, dadurch gekennzeichnet, daß die opto-elektrischen Mittel (2) aus einem optischen Empfänger (2a) bestehen, der einer Vorrichtung (2b) zur Erzeugung von elektrischen Signalen zugeordnet ist.

6. Schaltvorrichtung nach Anspruch 1, dadurch gekennzeichnet, daß zur Übertragung von Signalen mit zwei logischen Pegeln 1 und 0 die elektro-optischen Wandlervorrichtungen für einen der Zustände ein optisches Signal geringer Leistung $(P_0)$ und für den anderen Zustand ein optisches Signal erzeugen, das mit einer Frequenz (f), die sehr viel höher als die Frequenz des logischen Signals ist, zwischen zwei Pegeln optischer Leistung $(P_{min}$ und $P_{max})$ zerhackt ist.

7. Schaltvorrichtung nach Anspruch 1, dadurch gekennzeichnet, daß die Koppelschaltung gemischt ist und außer den Verbindungsmitteln mit Lichtleitfasern passive Koppelmittel mit logischen Schaltungen aufweist.

FIG. 1

FIG. 2

FIG. 3

FIG. 5

EP 0 463 918 B1

FIG. 4

FIG. 6

FIG. 7